# EUROPÄISCHE PATENTANMELDUNG

(11) **EP 1 251 339 A2**
(43) Veröffentlichungstag der Anmeldung: **23.10.2002**
(21) Anmeldenummer: 02006961.3
(22) Anmeldetag: 27.03.2002
(51) Int. Cl.: G01F 1/32, G01F 1/36

(54) **Hydrodynamisches Messkapselsystem**

(30) Priorität: 20.04.2001 DE 10119342
(71) Anmelder: Hydrometer GmbH, 91522 Ansbach (DE)
(72) Erfinder: Kroemer, Harald, 91522 Ansbach (DE); Zellner, Claus, 91522 Ansbach (DE)
(74) Vertreter: Matschkur, Lindner Blaumeier Patent- und Rechtsanwälte

(57) **Zusammenfassung**

Flüssigkeitszähler, insbesondere Wasserzähler mit elektronischem Zählwerk, mit einem fest installierten Anschlussgehäuse und einem austauschbaren, das Messwerk enthaltenden Kapselzähler, wobei im Kapselzähler ein hydrodynamisches Messsystem ohne mechanisch bewegte Bauteile angeordnet ist, das Strömungsänderungen im Bereich einer Engstelle mittels Sensoren erfasst, die in das Gehäuse des Messsystems integriert sind.

## Beschreibung

Die Erfindung bezieht sich auf einen Flüssigkeitszähler, insbesondere Wasserzähler mit elektronischem Zählwerk, mit einem fest installierten Anschlussgehäuse und einem austauschbaren, das Messwerk enthaltenden Kapselzähler.

Messkapselsysteme in Trockenläuferausführung bestehen zurzeit aus verschiedenen Bauteilgruppen. Zum einen hat man eine fest installierte Funktionsgruppe, also das Anschlussgehäuse und zum anderen eine austauschbare Funktionsgruppe, die aus dem Zählwerk, einem mechanisch bewegten Hydrauliksystem und einem Metallring /-Bauteil besteht, der mittels Gewinde oder Bajonettverschluss die Verbindung zwischen Zählwerk, Hydraulik und Anschlussgehäuse herstellt.

Dabei bestehen die mechanisch bewegten Messsysteme meistens aus einem Flügelrad mit Lagersystem und einem Übertragungselement, welches die ermittelte, strömungsinduzierte Drehbewegung aus dem Messraum in das Zählwerk überträgt. Diese derzeitigen hydraulischen Messsysteme bestehen aus mehreren bewegten Bauteilen, die somit verschleißanfällig sind.

Ohne verschleißanfällige, mechanisch bewegte Teile kommen zwar heutzutage bereits Flüssigkeitszähler auf, bei denen in die Strömung eingekoppelte Signale und deren Veränderungen durch die Strömung (unterschiedliche Laufzeit von Ultraschallsignalen mit und gegen die Strömung) Rückschlüsse auf den Durchfluss zulassen. Diese Systeme sind jedoch relativ kompliziert und teuer und auch nicht für alle Messzwecke gleichermaßen geeignet.

Dies gilt auch für einen Schwingstrahlzähler wie er in der US 4 827 777 beschrieben ist. Diese bekannte Konstruktion soll aber weder als Messkapsel eingesetzt werden noch ist sie nach ihrem Aufbau für einen solchen Messkapseleinsatz geeignet. Darüber hinaus enthält sie wiederum bewegliche Teile.

Der Erfindung liegt daher die Aufgabe zugrunde einen Messkapselzähler der eingangs genannten Art so auszugestalten, dass ohne die Notwendigkeit, in die Strömung eingekoppelte Signale zu bestimmen, genaue Messungen ohne verschleißanfällige Bauteile erzielbar sind.

Zur Lösung dieser Aufgabe ist erfindungsgemäß vorgesehen, dass im Kapselzähler ein hydrodynamisches Messsystem ohne mechanisch bewegte Bauteile angeordnet ist, das Strömungsänderungen im Bereich einer Engstelle mittels Sensoren erfasst, die in das Gehäuse des Messsystems integriert sind. Das hydrodynamische Messsystem arbeitet dabei bevorzugt nach dem Schwingstrahlprinzip, dem Wirbelverfahren oder nach dem Wirkdruckverfahren.

Ein Messsystem nach dem Schwingstrahlprinzip enthält eine Einströmdüse und eine bevorzugt erweiterte Ausströmdüse, wobei sich die Gehäusewandung von der Einströmdüse ausgehend, über den Bereich eines mittigen Prallkörpers hinaus erweitert. Der aus der Ausströmdüse austretende Flüssigkeitsstrahl wird durch komplexe Vorgänge im Messraum zur Seite ausgelenkt und pendelt mit einer dem Durchfluss proportionalen Frequenz abwechselnd seitlich am Prallkörper vorbei.

Beim Wirbelverfahren wird stattdessen ein, im Wesentlichen homogener, Durchfluss durch eine zylindrische Messkapsel erzeugt, in der ein in der Strömung angeordnetes Widerstandselement zur Bildung von Wirbeln an den Außenkanten führt, wobei die Zahl der pro Zeiteinheit entstehenden Wirbel proportional zur Durchflussmenge ist. Es muss also in diesem Fall eine Zählung der Wirbel über das Auswertesystem mit den Sensoren erfolgen.

Beim Wirkdruckverfahren schließlich ist in einem zylindrischen Abschnitt des Durchströmungsbereichs der Messkapsel, in dem wiederum eine möglichst homogene Strömung eingekoppelt wird, eine Drosselstelle angeordnet, sodass über den Differenzdruck vor und nach der Drosselstelle die Durchflussmenge bestimmt werden kann.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: Einen Schnitt durch einen erfindungsgemäßen Messkapselzähler nach dem Wirbelverfahren,
- Fig. 2: eine teilweise geschnittene Aufsicht auf den Messkapselzähler nach Fig. 1,
- Fig. 3: einen Schnitt durch einen erfindungsgemäßen Messkapselzähler nach dem Schwingstrahlprinzip und
- Fig. 4 und 5: Schnitte durch unterschiedliche Ausführungsformen von Messkapselzählern, die nach dem Wirkdruckverfahren arbeiten.

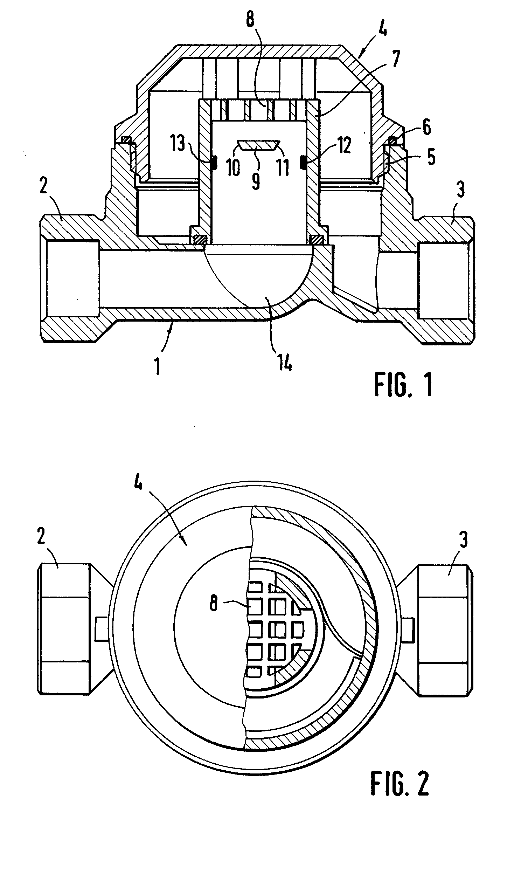

In den Fig. 1 und 2 erkennt man das fest in ein Rohrsystem installierte Anschlussgehäuse 1 mit einem Flüssigkeitseinlaufstutzen 2 und einem Flüssigkeitsauslaufstutzen 3. Auf dieses Anschlussgehäuse 1 ist der eigentliche Messkapselzähler 4 mithilfe einer Verschraubung 5 aufsetzbar, die durch einen Dichtring 6 abgedichtet wird. Der Messkapselzähler 4 enthält in nicht gezeigter, weil hinlänglich bekannter, Weise, die eigentliche Auswerteelektronik und das Anzeigezählwerk sowie ein Flüssigkeitsumlenksystem um die aufsteigende Flüssigkeit von oben in das Strömungsgehäuse 7 des hydrodynamisches Messsystems einzuleiten. Hierzu sind bei dem in den Fig. 1 und 2 dargestellten Messsystem nach dem Wirbelverfahren Flüssigkeitsleiteinrichtungen 8 am oberen Ende des Strömungsrohrs 7 angeordnet, um eine möglichst gleichmäßige Durchströmung zu erzielen. Die Strömung trifft dabei auf ein fest im Messrohr angeordnetes Widerstandselement 9, an dessen Kanten 10 und 11 sich Wirbel bilden, wobei die Zahl der Wirbel pro Zeiteinheit ein Maß für das Durchflussvolumen der strömenden Flüssigkeit ist. Diese Wirbel können durch schematisch in Fig. 1 angedeutete, in das Gehäuse des Kapselzählers integrierte Sensoren 12 und 13 erfasst werden, die mit der nicht gezeigten Auswerteelektronik in der Messkapsel 4 in Verbindung stehen. Die durch den Flüssigkeitseinlaufstutzen einströmende Flüssigkeit wird umgelenkt und strömt außerhalb des Messrohrs 7 nach oben, in diesem von oben nach unten und gelangt dann über den Auslauf 14 schließlich zum Flüssigkeitsauslaufstutzen 3.

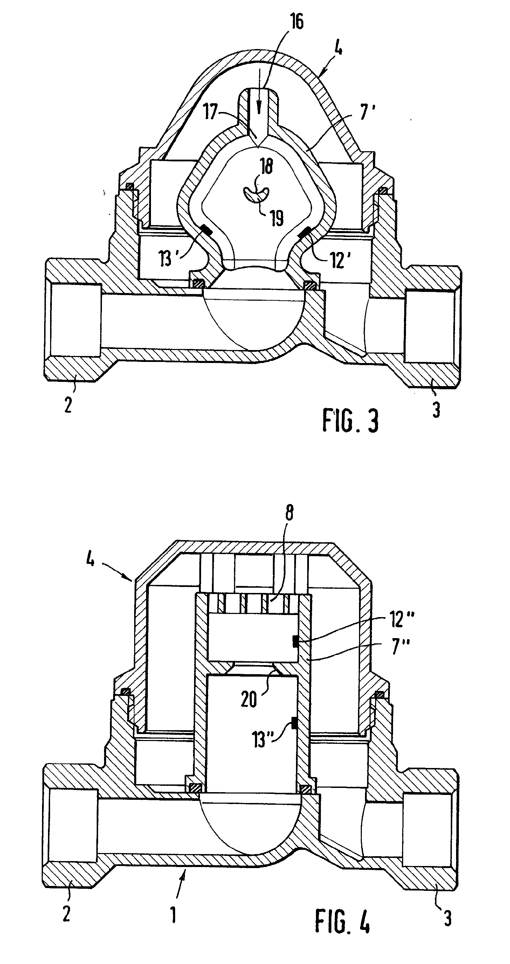

Das Ausführungsbeispiel eines erfindungsgemäßen Kapselzählers mit hydrodynamischem Messsystem gemäß Fig. 3 arbeitet nach dem Schwingstrahlprinzip und unterscheidet sich, von der etwas anderen Formgebung der Messkapsel 4 abgesehen, die der anderen Form des Strömungsgehäuses 7' des Schwingstahlmesssystems angepasst ist, im Wesentlichen nur durch die Ausbildung dieses Gehäuses 7'. Es enthält unterhalb der oberen Einströmöffnung 16 eine Düse 17, die einen Strahl auf einen, mit einer Einsattelung 18 versehenen Prallkörper 19 richtet. Der Flüssigkeitsstrahl gerät durch das komplexe Wirbelsystem in eine pendelnde Schwingung und strömt abwechselnd seitlich am Prallkörper 19 vorbei, wobei die Pendelfrequenz dem Durchfluss proportional ist. Über Detektoren 12' und 13', die in die Wände des Gehäuses 7' integriert sind, oder die gegebenenfalls auch in den Prallkörper 19 eingebaut sein könnten, lässt sich der Schwingstrahl erfassen und seine Pendelfrequenz als Eingangssignal für die nicht gezeigte Auswerteelektronik weiterleiten.

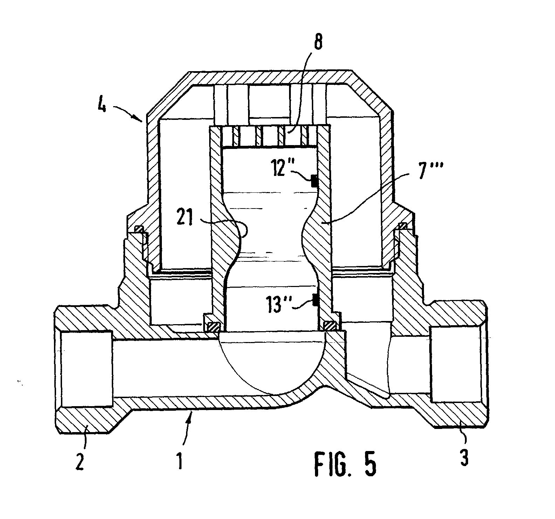

Bei den beiden Kapselzählern nach dem Wirkdruckverfahren, die in den Fig. 4 und 5 dargestellt sind, ist wiederum ein zylindrisches Durchströmgehäuse 7" bzw. 7''' vorhanden, das am oberen Ende mit einem Einströmgitterwerk 8 zur Strömungsgleichrichtung versehen ist. Das Gehäuse 7" bzw. 7''' enthält eine Engstelle 20 bzw. 21, wobei Drucksensoren 12" und 13" oberhalb und unterhalb der Engstelle die unterschiedlichen Drucke, die durch diese Engstelle hervorgerufen werden, erfassen und als Signale an die Auswerteelektronik weiterleiten. Bei allen vorstehend beschriebenen Ausführungsformen eines hydrodynamisches Messkapselsystems hat man im Messraum nur strömungsführende Kanäle und keine bewegten und verschleißbaren Teile, wobei bei allen drei Messsystemen das druckstabile Gehäuse 7, 7', 7", 7''' als Sensor (beispielsweise durch eine Piezoschicht auf Innenwand des Strömungsgehäuses) verwendet werden kann.

## Patentansprüche

1. Flüssigkeitszähler, insbesondere Wasserzähler mit elektronischem Zählwerk, mit einem fest installierten Anschlussgehäuse und einem austauschbaren, das Messwerk enthaltenden Kapselzähler, **dadurch gekennzeichnet, dass** im Kapselzähler (4) ein hydrodynamisches Messsystem (7, 7', 7") ohne mechanisch bewegte Bauteile angeordnet ist, das Strömungsänderungen im Bereich einer Engstelle mittels Sensoren (12, 13; 12', 13'; 12", 13") erfasst, die in das Gehäuse (7, 7', 7") des Messsystems integriert sind.

2. Flüssigkeitszähler nach Anspruch 1, **gekennzeichnet durch** ein Messsystem (7') nach dem Schwingstrahlprinzip.

3. Flüssigkeitszähler nach Anspruch 1, **gekennzeichnet durch** ein Messsystem (7) nach dem Wirbelverfahren.

4. Flüssigkeitszähler nach Anspruch 1, **gekennzeichnet durch** ein nach dem Wirkdruckverfahren arbeitendes Messsystem (7").
